# EUROPEAN PATENT APPLICATION

(11) **EP 4 711 651 A1**
(43) Date of publication of application: **18.03.2026**
(21) Application number: 24200245.9
(22) Date of filing: 13.09.2024
(51) Int. Cl.: F16J 15/34, B01F 35/30

(54) **SEAL CARTRIDGE FOR SEALING AN INTERFACE BETWEEN AN OPENING IN A VESSEL AND A ROTARY SHAFT OF AN AGITATOR SYSTEM, AGITATOR SYSTEM AND MIXING ARRANGEMENT**

(71) Applicant: Alfa Laval Corporate AB, 221 00 Lund (SE)
(72) Inventor: FØNS, Michael Juhl, DK-8382 HINNERUP (DK); THORØE-BJERRISGAARD, Søren, DK-6580 VAMDRUP (DK)
(74) Representative: Alfa Laval Attorneys

(57) **Abstract**

The present invention relates to a seal cartridge (100) for sealing an interface between an opening (52) in a vessel (50) and a rotary shaft (12) of an agitator system (10) extending into the vessel (50) through the opening (52). The seal cartridge (100) comprises a cartridge housing (102), an inner sleeve (110) rotationally coupled to the cartridge housing (102) configured to receive the rotary shaft (12) along an axial direction (AD) thereof and to co-rotate with the rotary shaft (12), and a rotary seal (120). A first end portion (110a) of the inner sleeve (110) comprises an axially facing stop surface (111) configured to interact with an axially facing stop step (13) of the rotary shaft (12), such that the seal cartridge (100) co-translates with the rotary shaft (12) in the axial direction (AD) in response to an axial translation of the radially extending stop step (13). An agitator system (10) and a mixing arrangement (1) for mixing a liquid product (2) are also provided.

## Description

### Technical Field

The invention relates to the field of agitators. It is related to sealing an interface between an opening in a vessel and a rotary shaft of an agitator system. More particularly, it is related to seal cartridge for sealing an interface between an opening in a vessel and a rotary shaft of an agitator system extending into the vessel through the opening, an agitator system for mixing a liquid product comprising such a seal cartridge, and a mixing arrangement comprising such an agitator system.

### Background Art

Agitators are used in numerous applications. In for example, the food industry, the pharma industry, and the chemical industry, mixing tanks including agitators are used in various processing operations where a product or similar held in a mixing tank is to be mixed or agitated. Agitators are commonly used where two or more constituents are to be mixed. Further, agitators are commonly used for preventing solids or particles dispersed in a liquid from floating to the surface or from sinking to the bottom.

Agitators for tanks typically include a rotatable shaft which is provided with one or more impellers or agitator blades used to agitate a product held in a tank. The rotatable shaft is typically rotated by a motor located outside the tank, meaning that the rotatable shaft extends into the tank through some form of opening or port. In order to prevent the product form escaping the tank or to prevent contaminations from entering the tank, the interface between the rotatable shaft and the opening needs to be sealed by a so-called rotary seal which can accommodate the rotation of the shaft in relation to the opening.

Such rotary seal must be very precisely installed and adjusted in relation to the opening and the shaft such that the rotary seal not only can accommodate the rotation of the shaft in relation to the opening, but also can take up any movement of the shaft along its length, for example emanating from thermal expansion of the shaft or external loads. If the rotary seal is not precisely installed and adjusted the seal may risk leaking or getting damaged.

In practice, many types of rotary seals can only take up very limited movements along the length of the shaft, meaning that the seals must follow together with the shaft as the shaft moves along its length. The fact that such rotary seals, as a rule, must follow together with the shaft as the shaft moves along its length means that the rotary seal must be installed very carefully and locked precisely in relation to the length of the shaft. This means in turn that the installation of the rotary seal is time consuming and prone to errors. Even the slightest installation error can result in leakage or premature failure of the rotary seal.

To this end, it has been suggested to build in the rotary seal into a cassette which fits the tank opening and the shaft to make the installation and adjustment easier and less prone to installation errors. However, even when the rotary seal is built into a cassette, purpose designed tools such as distance pieces are typically used in order to correctly position the cassette, and hence the rotary seal, in relation to the opening and the shaft. Thus, also the installation of such cassettes are troublesome and time consuming.

The cassette and hence the rotary seal is typically locked in relation to the shaft by screwing a set screw into contact with an external surface of the shaft. Such set screw can consequently damage the external surface of the shaft. Even the slightest damage to the external surface of the shaft risks damaging O-rings and other components when the cassette and hence the rotary seal is to be replaced, for instance during maintenance. As a result, the external surface of the shaft may have to be polished or grinded during maintenance, which for natural reasons complicates the maintenance, making it significantly more time consuming and prone to consequential errors.

Even though currently available rotary seals provide high performance in terms of sealing performance, there is room for improvement when it comes to designing rotary seals for agitator systems which are easier to install and replace, and which have a prolonged service life.

### Summary

With the above in mind, it is an objective of the present invention to provide a seal cartridge for sealing an interface between an opening in a vessel and a rotary shaft of an agitator system extending into the vessel through the opening as well as an improved agitator system including such a seal cartridge. Another objective is to provide a mixing arrangement for mixing a liquid product including such an agitator system.

Another objective is to provide such a seal cartridge which is easier to install.

Another objective is to provide such a seal cartridge which is easier to replace.

Another objective is to provide such a seal cartridge which requires less adjustment when being installed.

Another objective is to provide such a seal cartridge which does not require any adjustment along the length of the rotary shaft.

Another objective is to provide such a seal cartridge which is less prone to installation errors.

Another objective is to provide such a seal cartridge which requires no purpose designed tools or dedicated loose installation equipment.

Another objective is to provide such a seal cartridge which is more cost-effective.

To achieve at least one of the above objects and also other objects that will be evident from the following description, a seal cartridge for sealing an interface between an opening in a vessel and a rotary shaft of an agitator system extending into the vessel through the opening, having the features defined in claim 1 is provided according to the present inventive concept. An agitator system for mixing a liquid product held in a vessel comprising such a seal cartridge is provided according to claim 14. A mixing arrangement for mixing a liquid product comprising such an agitator is provided according to claim 15.

More specifically, according to a first aspect, there is provided a seal cartridge for sealing an interface between an opening in a vessel and a rotary shaft of an agitator system extending into the vessel through the opening, the seal cartridge comprising:
a cartridge housing comprising a first radially outer surface portion provided with one or more outer seals configured to abut and seal against an internal surface portion associated with the vessel defining the opening,
an inner sleeve rotationally coupled to the cartridge housing via a bearing, the inner sleeve being configured to receive the rotary shaft along an axial direction thereof and to co-rotate with the rotary shaft, and
a rotary seal comprising; a non-rotary sealing element and a rotary sealing element each circumscribing the inner sleeve, wherein the non-rotary sealing element and the rotary sealing element are configured to seal against each other, wherein the non-rotary sealing element is sealingly coupled to the cartridge housing and the rotary sealing element is sealingly coupled to the inner sleeve,
   wherein a first end portion of the inner sleeve comprises an axially facing stop surface configured to interact with an axially facing stop step of the rotary shaft, such that the seal cartridge co-translates with the rotary shaft in the axial direction in response to an axial translation of the radially extending stop step.

Hereby an improved seal cartridge for an agitator system is provided. More specifically, hereby an improved seal cartridge for sealing an interface between an opening in a vessel and a rotary shaft of an agitator system extending into the vessel through the opening is provided.

The seal cartridge is designed for and hence suitable for sealing an interface between an opening in a vessel and a rotary shaft of an agitator system extending into the vessel through the opening.

By the seal cartridge comprising a cartridge housing comprising a first radially outer surface portion provided with one or more outer seals configured to abut and seal against an internal surface portion associated with the vessel defining the opening, the seal cartridge may provide for an efficient seal between an outer surface thereof in relation to the opening in the vessel. Thus, the interface between the first radially outer surface portion of the cartridge housing and the in internal surface portion associated with the vessel may be efficiently sealed by the one or more outer seals.

The "internal surface portion associated with the vessel defining the opening" may be any internal surface portion or surface facing an opening and circumscribing the opening. Thus, the internal surface portion associated with the vessel defining the opening may be any internal surface portion or surface having a major component facing the opening and circumscribing the opening. Further, the internal surface portion associated with the vessel defining the opening may be an internal surface portion or surface of the vessel itself or may be an internal surface portion or internal surface connected to the vessel, such as an internal surface or internal surface portion of a flange or duct section connected to the vessel. Further, the internal surface portion associated with the vessel will often times be an internal surface of a flange connected to the vessel at an opening in the vessel itself. Such flange may be integrally formed with the vessel, welded to the vessel, bolted to the vessel or riveted to the vessel to give a few non-limiting examples.

By the seal cartridge comprising an inner sleeve rotationally coupled to the cartridge housing via a bearing, where the inner sleeve is configured to receive the rotary shaft along an axial direction thereof and to co-rotate with the rotary shaft, the rotary shaft may be received in the seal cartridge in a secure manner where the rotary shaft is rotationally coupled to the sleeve while not directly affecting the adjustment or configuration of rotary seal. Thus, the rotary shaft may be rotationally supported in relation to the cartridge housing via the inner sleeve and the bearing.

By the seal cartridge comprising a rotary seal comprising, where the rotary seal comprises a non-rotary sealing element and a rotary sealing element each circumscribing the inner sleeve, wherein the non-rotary sealing element and the rotary sealing element are configured to seal against each other, wherein the non-rotary sealing element is sealingly coupled to the cartridge housing and the rotary sealing element is sealingly coupled to the inner sleeve, the seal cartridge may provide for an efficient sealing between the rotary shaft and the cartridge housing. More specifically, the seal cartridge may provide for an efficient sealing between the rotary shaft and the cartridge housing while the rotary shaft is rotated in relation to the cartridge housing, and also while the rotary shaft is stationary in relation to the cartridge housing. Thus, the seal cartridge may provide for an efficient sealing between the rotary shaft and the cartridge housing during operation as well as during standstill.

The seal cartridge may comprise one or more rotary seals, such as two, three or four rotary seals.

By a first end portion of the inner sleeve comprises an axially facing stop surface configured to interact with an axially facing stop step of the rotary shaft, such that the seal cartridge co-translates with the rotary shaft in the axial direction in response to an axial translation of the radially extending stop step, significant advantages are achieved.

By the stop surface being configured to interact with the stop step of the rotary shaft, the complete seal cartridge may follow any axial translation of the radially extending stop step of the rotary shaft. Thus, the complete seal cartridge may follow any axial movement of rotary shaft. This means that the rotary seal may follow any axial movement of rotary shaft. In other words, both the non-rotary sealing element and the rotary sealing element of the rotary seal may follow any axial movement of rotary shaft, meaning that the mutual relationship between the non-rotary sealing element and the rotary sealing element may be unaffected or substantially unaffected by an axial movement of rotary shaft and hence the complete seal cartridge. Thus, the seal cartridge including the rotary seal may "float" together with the rotary shaft along the axial direction of the rotary shaft in relation to the vessel. In this way, the rotary seal including the non-rotary sealing element and the rotary sealing element may be shielded from actually experiencing any movement of the rotary shaft along the axial direction of the rotary shaft in relation to the vessel.

Further, by the stop surface being configured to interact with the stop step of the rotary shaft, installation of the seal cartridge may by significantly simplified as compared to state of the art designs where e.g. set screw interacting with an external surface of the rotary shaft is used. In this regard, the seal cartridge may when being installed be moved or translated along the axial direction until the stop surface interacts with the stop step, meaning that the seal cartridge has reached its correct position in the axial direction in relation to the rotary shaft and typically in relation to the vessel. Thus, the need for any adjustment of the location of the seal cartridge and hence the rotary seal may be eliminated since the seal cartridge may be moved or translated until any further movement or translation is prevented or counteracted by the interaction between the stop surface and the stop step.

Further, by the stop surface being configured to interact with the stop step of the rotary shaft, installation errors of the seal cartridge may by significantly reduced or eliminated as compared to state of the art designs where e.g. set screw interacting with an external surface of the rotary shaft is used.

Further, by the stop surface being configured to interact with the stop step of the rotary shaft, the time required for installing the seal cartridge may be significantly reduced, hence resulting in a more cost-effective seal cartridge.

By "axially facing" is here meant the surface concerned faces in a direction along the axial direction of the inner sleeve and hence along the axial direction of the rotary shaft. Thus, an axially facing surface extends in a radial direction of the inner sleeve and hence in a radial direction of the rotary shaft. Thus, an axially facing surface is a surface having a major component facing in a direction along the axial direction of the inner sleeve and hence along the axial direction of the rotary shaft. It is to be understood that the axially facing stop surface and the an axially facing stop step are facing in opposite axial directions so as to be able to interact with each other. In practice, the axially facing stop surface faces in a direction into of the vessel whereas the axially facing stop step faces in a direction out of the vessel.

By "stop step" is here meant any step, flange, protrusion or similar of rotary shaft or any step, flange, protrusion or similar connect to the rotary shaft which is capable of interacting with the axially facing stop surface of the inner sleeve.

By "configured to interact with" is here meant that a direct or indirect contact may be established such that at force may be transferred between the surfaces concerned. Thus, a force may be transferred between the axially facing stop surface and the axially facing stop step by the axially facing stop surface interacting with the axially facing stop step.

The axially facing stop surface may be configured to bear against the axially facing stop step, which is advantageous in that a rigid direct contact between the stop surface and the stop step may be achieved. In this way, the direct contact between the stop surface and the stop step may allow for an accurate positioning of the seal cartridge in relation to the rotary shaft. Thus, the seal cartridge may be accurately positioned in relation to the rotary shaft with no or only a limited amount of slack in terms of tolerance.

The one or more outer seals may be configured to slidingly move along the internal surface portion associated with the vessel in the axial direction in response to the seal cartridge being translated in the axial direction, which is advantageous in that any movement of the seal cartridge along the axial direction may be accommodated by the one or more outer seals slidingly moving along the internal surface portion associated with the vessel. Thus, the rotary seal may be unaffected or substantially unaffected by any movement of the of the rotary shaft and hence the seal cartridge along the axial direction.

The one or more outer seals may be configured to slidingly move a distance along the internal surface portion associated with the vessel in the axial direction corresponding to a distance which the seal cartridge being translated in the axial direction, which is advantageous in that the rotary seal may be unaffected by any movement of the seal cartridge along the axial direction.

The one or more outer seals may be configured to slidingly move a distance in a range of 0,1 mm to 3 mm along the internal surface portion associated with the vessel in the axial direction in response to the seal cartridge being translated in the axial direction, which is advantageous in that the outer seals may be configured to accommodate any movements of the seal cartridge along the axial direction in practice typically emanating from thermal expansion of the rotary shaft or from loads that the rotary shaft is subjected to. In practice, the one or more outer seals may slidingly move a distance of about 0,5 mm along the internal surface portion associated with the vessel in the axial direction in response to the seal cartridge being translated in the axial direction as a result of a thermal expansion of the rotary shaft and/or as a result of a load related movement of the rotary shaft.

A second, opposite, end portion of the inner sleeve may comprise an axially facing abutment surface configured to receive an axial force for pushing the axially facing stop surface against the axially facing stop step, which is advantageous in that the seal cartridge may be pushed into place or kept in place in relation to the rotary shaft by subjecting the abutment surface to an axial force. Thus, the stop surface may be forced to interact with or to contact the stop step by subjecting an opposite end portion of the inner sleeve to an axial force.

The axial force may be applied by one or more axially extending fixture elements, such as fixture screws, configured to push against the axially facing abutment surface in response to being tightened, which is advantageous in that the seal cartridge may be pushed into place or kept in place in relation to the rotary shaft without interacting or affecting any external surface of the rotary shaft. This is in great contrast to the common practice of fixing a seal cassette or rotary seal in relation to a rotary shaft by a set screw interacting with an external surface of the rotary shaft. Thus, the risk of damaging the external surface of the rotary shaft may be eliminated or significantly reduced.

The axial force may be applied by one or more axially extending fixture elements, such as fixture screws, configured to push against the axially facing abutment surface in response to being tightened in relation to the rotary shaft. Thus, the one or more axially extending fixture elements may push against the axially facing abutment surface in response to being tightened in relation to the rotary shaft. The one or more fixture elements may be tightened in relation to the rotary shaft by interacting with the rotary shaft, either directly or indirectly. In practice, the one or more fixture elements may be tightened in relation to an element which is attached to or axially fixed in relation to the rotary shaft.

By "fixture element" is here meant any type of element, part, detail or similar which is capable of pushing against a surface in response to being tightened. In this regard, the wording "tightened" is to be interpreted broadly so as to encompass any type of pressing action which may be applied by actuating or otherwise interacting with the fixture element. Thus, a fixture element may be any type of screw, any type of clamp, any type of plug, any type of wedge or similar capable of applying an axial force in response to being tightened.

The second end portion of the inner sleeve may comprise a torque abutment surface configured to receive a rotational torque for co-rotating the inner sleeve with the rotary shaft, which is advantageous in that the inner sleeve and hence the rotary sealing element may be co-rotated with the rotary shaft by the torque abutment surface receiving a rotational torque from the rotary shaft.

The torque abutment surface may be configured to receive the rotational torque by the one or more axially extending fixture elements interacting with the torque abutment surface, which is advantageous in that the in that the inner sleeve and hence the rotary sealing element may be co-rotated with the rotary shaft without interacting or affecting any external surface of the rotary shaft. Thus, the risk of damaging the external surface of the rotary shaft may be eliminated or significantly reduced.

The axially facing abutment surface may be configured to receive the rotational torque by the one or more axially extending fixture elements pushing on the axially facing abutment surface.

The axially facing abutment surface may be configured to receive a portion of the rotational torque by the one or more axially extending fixture elements pushing on the axially facing abutment surface.

The cartridge housing may comprise a second radially outer surface portion configured to abut an inwardly facing surface of a bearing housing for radially supporting the seal cartridge, which is advantageous in that the seal cartridge may be firmly radially supported.

The second radially outer surface portion may be configured to abut an inwardly facing surface of a bearing housing indirectly, such as via a seal or a spacer.

The second radially outer surface portion may be configured to abut an inwardly facing surface of a bearing housing directly.

The second radially outer surface portion may be configured to abut an inwardly facing surface of a bearing housing indirectly and directly. Thus, the second radially outer surface portion may partially abut an inwardly facing surface of a bearing housing indirectly and partially abut the inwardly facing surface of a bearing housing directly.

The second radially outer surface portion may be provided with one or more outer seals configured to abut seal against an inwardly facing surface of a bearing housing.

Each outer seal may comprise an O-ring provided in a groove circumscribing the first radially outer surface portion of the seal cartridge, which is advantageous in that the outer seals, i.e. the O-rings, may slide along the internal surface portion associated with the vessel defining the opening while being kept in place by a respective groove.

The rotary seal may comprise a spring element configured to push the non-rotary sealing element and the rotary sealing element against each other, which is advantageous in that a desired contact force between the non-rotary sealing element and the rotary sealing element may be achieved.

The non-rotary sealing element may be mainly formed of silicon or carbon, and the rotary sealing element may be mainly formed of silicon, which is advantageous in that a reliable seal with a long service life may be realized.

According to another aspect of the invention, there is provided an agitator system for mixing a liquid product held in a vessel, the agitator system comprising:
a rotary shaft provided with one or more impellers configured to mix the liquid product,
a drive unit coupled to the rotary shaft and configured to rotate the rotary shaft, and
a seal cartridge according to the first aspect, for sealing an interface between an internal surface portion associated with the vessel defining an opening in the vessel for receiving the rotary shaft and the rotary shaft.

In general, features of this aspect provide similar advantages as discussed above in relation to the first aspect. Consequently, said advantages will not be repeated in order to avoid undue repetition.

According to another aspect of the invention, there is provided a mixing arrangement for mixing a liquid product, the mixing arrangement comprising:
a vessel configured to hold the liquid product, and
an agitator system according to the previous aspect, wherein the rotary shaft extends into the vessel through the opening such that the one or more impellers are located in the vessel, and the drive unit is located outside of the vessel, wherein the interface between the opening in the vessel and the rotary shaft is sealed by the seal cartridge.

In general, features of this aspect provide similar advantages as discussed above in relation to the first aspect. Consequently, said advantages will not be repeated in order to avoid undue repetition.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described as such device may vary. It is also to be understood that the terminology used herein is for the purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

Thus, throughout this specification, unless the context requires otherwise, the word "comprise" or variations such as "comprises" or "comprising", will be understood to imply the inclusion of a stated integer or group of integers but not the exclusion of any other integer or group of integers.

### Brief Description of the Drawings

The above and other aspects of the present inventive concept will now be described in more detail, with reference to appended figures showing embodiments or variants of the inventive concept. The figures should not be considered limiting, instead, they are used for explaining and understanding.

As illustrated in the figures, the sizes of details, layers and regions may be exaggerated for illustrative purposes and, thus, are provided to illustrate the general structures of variants. Like reference numerals refer to like elements throughout.
Fig. 1A is a schematic partial cross-sectional view of mixing arrangement having a top mounted agitator system attached to a vessel.
Fig. 1B is a schematic partial cross-sectional view of mixing arrangement having a side mounted agitator system attached to a vessel.
Fig. 2 is a schematic perspective view of how a seal cartridge according to the present inventive concept is installed in an agitator system by being received in a bearing housing of the agitator system.
Fig. 3A is a schematic side view of the seal cartridge of Fig. 2.
Fig. 3B is a perspective view of the seal cartridge of Fig. 2.
Fig. 4A is a schematic cross-sectional view of a seal cartridge installed in an agitator system.
Fig. 4B is an enlarged view of a lower portion of Fig. 4A.

### Detailed Description

The present inventive concept will now be described more fully hereinafter with reference to the accompanying drawings, in which currently preferred variants or embodiments of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

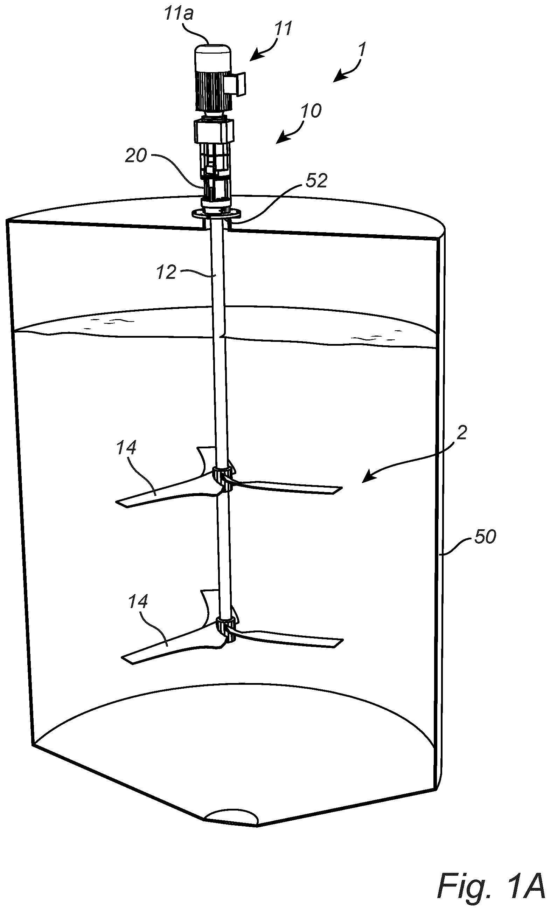

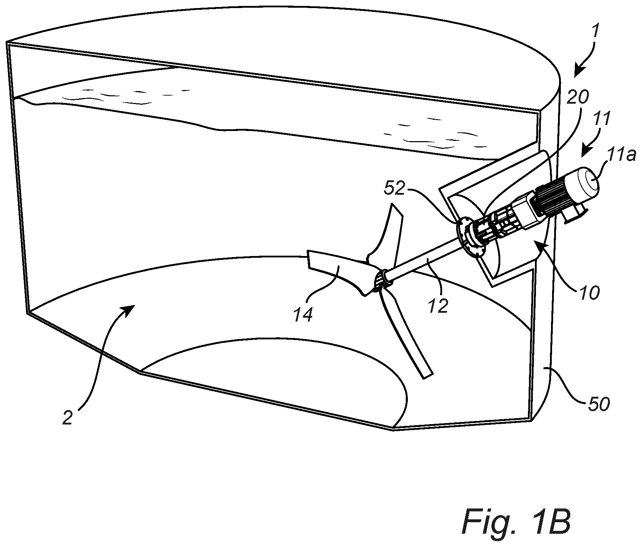

Initially two set-ups of mixing arrangements 1 will be briefly described with reference to Figs. 1A and 1B. Each mixing arrangement 1 comprises an agitator system 10 and a vessel 50.

Agitator systems 10 is, as known in the art, used to mix, agitate or blend a product 2 or similar held in the vessel 50. Thus, the general function of the mixing arrangement 1 and its agitator system 10 will not be described in detail hereinafter. Each agitator system 10 has a rotary shaft 12 which extends into its associated vessel 50, such as a stainless tank or similar, through an opening 52 in the vessel 50.

The rotary shaft 12 of the agitator system 10 of Fig. 1A is provided with two impellers 14 configured to agitate, mix or blend a product 2, such as a liquid product 2, held in the vessel 50.

The rotary shaft 12 of the agitator system 10 of Fig. 1B is provided with one impeller 14 configured to agitate, mix or blend a product 2, such as a liquid product 2, held in the vessel 50.

Each agitator system 10 has a drive unit 11 including an electrical motor 11a that transmits the energy required for agitating, mixing, and blending the product 2, either directly or via a gearbox, to the rotary shaft 12 shaft. As the rotary shaft 12 rotates, the impellers 14 are turned. The impeller movement typically creates a high flow of the product 2 with low shear due to a highly effective axial pumping effect on the product 2 in the vessel 50. This results in effective agitating, mixing or blending of the entire contents, i.e. the product 2 of the vessel 50.

The agitator system 10 of Fig. 1A is similar to the agitator system 10 of Fig. 1B. However, the agitator system 10 of Fig. 1A is top-mounted, whereas the agitator system 10 of Fig. 1B is side-mounted. This mean that the rotary shaft 12 of the agitator system 10 of Fig. 1A extends into the vessel in a downwards vertical direction, whereas the rotary shaft 12 of the agitator system 10 of Fig. 1B extends into the vessel in a downwards oblique direction.

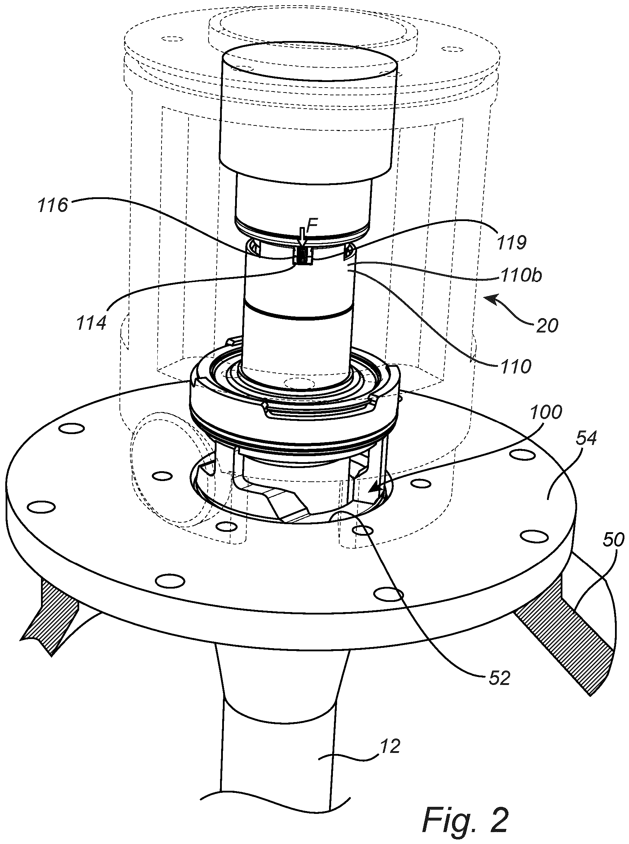

Each agitator system 10 has a bearing housing 20 arranged between the vessel 50 and the drive unit 11. The bearing housing 20 supports the drive unit 11. Thus, the bearing housing 20 holds or fixes the drive unit 11 in relation to the vessel 50. The bearing housing 20 is provided at the interface between the opening 52 in the vessel 50 and the rotary shaft 12. The bearing housing 20 further has the purpose of receiving and rotationally supporting the rotary shaft 12 at the interface between the opening 50 and the rotary shaft 12. In order to seal the interface between the opening 52 in the vessel 50 and a rotary shaft 12 a seal cartridge 100 is, as illustrated in Fig. 2, received in the bearing housing 20.

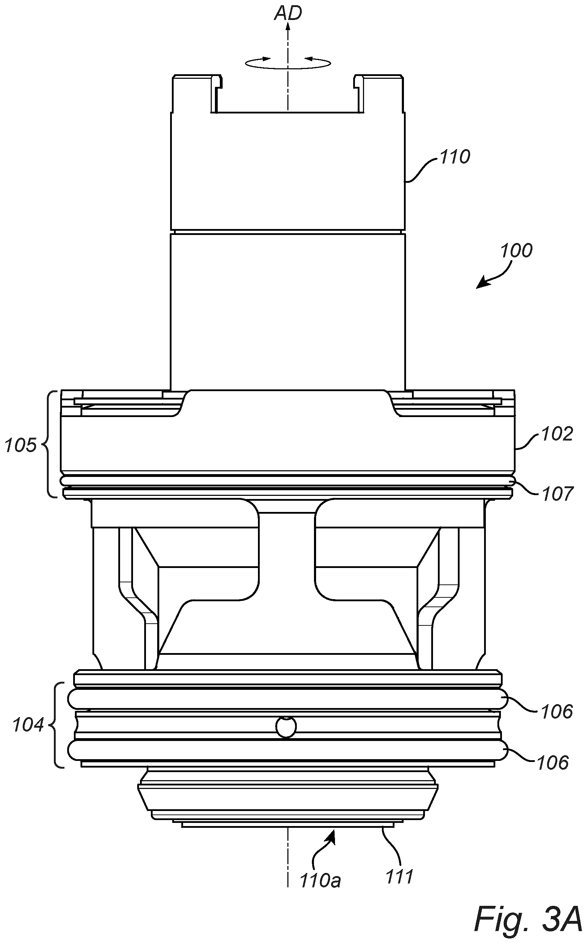

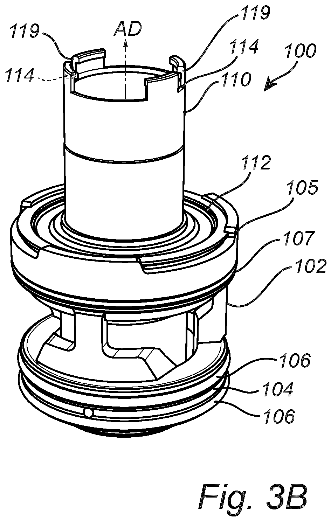

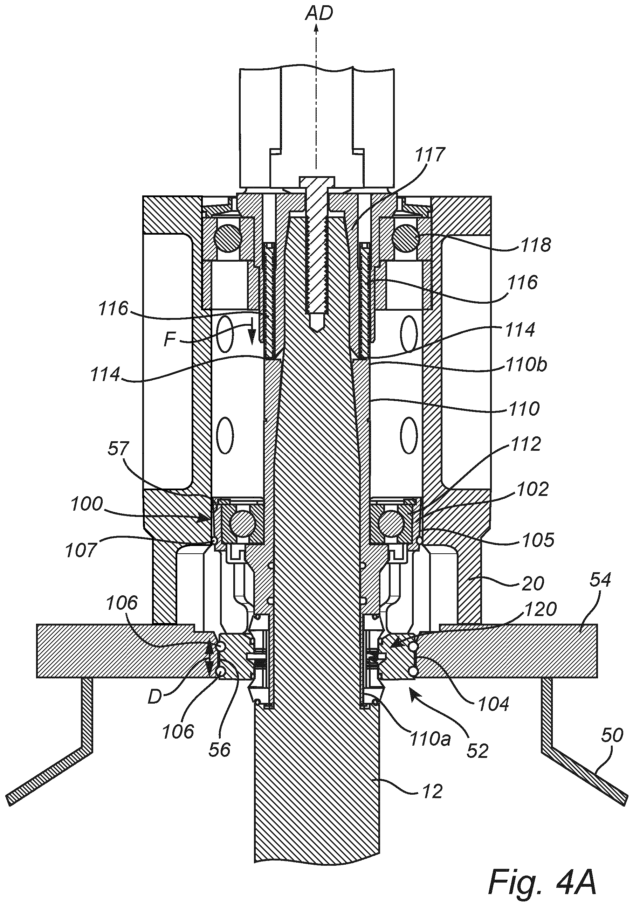

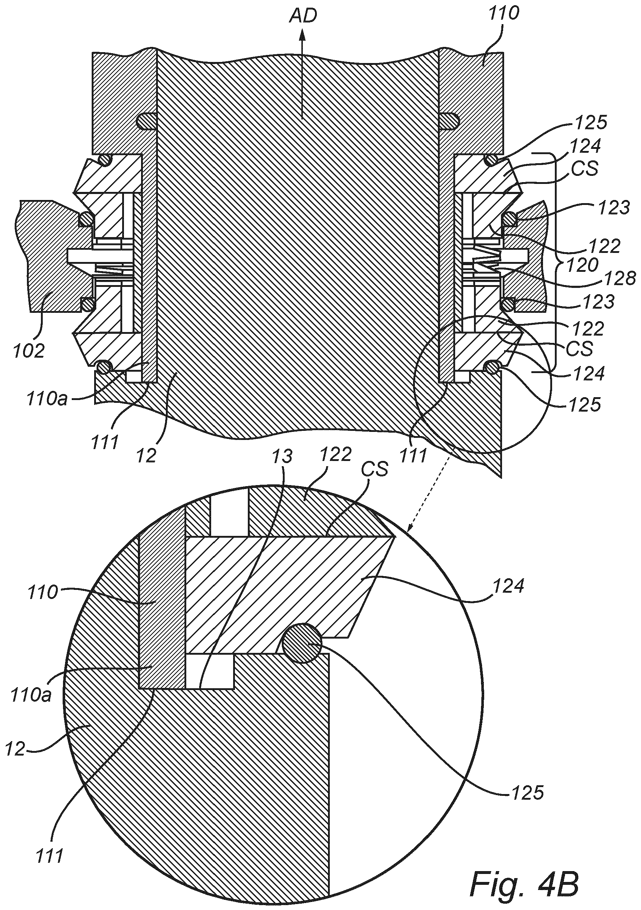

The design of the seal cartridge 100 of the agitator systems 10 of Figs. 1A and 1B will be described in more detail further below while referring to Figs. 3A, 3B, 4A and 4B.

As illustrated in Fig. 2, the seal cartridge 100 is received in the bearing housing 20. By the seal cartridge 100 being received in the bearing housing 20, the interface between the opening 52 in the vessel 50 and the rotary shaft 12 extending into the vessel 50 through the opening 52 is sealed by the seal cartridge 100. Thus, the seal cartridge 100 provides for that the interface between the opening 52 in the vessel 50 and the rotary shaft 12 is sealed in a rotary manner. Thus, the seal cartridge 100 provides for that the interface between the opening 52 in the vessel 50 and the rotary shaft 12 is sealed when the rotary shaft 12 is rotated, as well as when the rotary shaft 12 is stationary.

Now turning to Figs. 3A, 3B, 4A and 4B. Figs. 3A and 3B illustrates the seal cartridge 100 used for sealing the interface between the opening 52 in the vessel 50 and the rotary shaft 12 as illustrated in Fig. 2. Fig. 4A illustrates in cross-section how the seal cartridge 100 is received in the bearing housing 20 for sealing the interface between the opening 52 in the vessel 50 and the rotary shaft 12.

The seal cartridge 100 comprises a cartridge housing 102. The cartridge hosing 102 is configured to support and hold together the respective components of the seal cartridge 100. The depicted cartridge housing 102 is machined from a metal material. Suitable metal materials for the cartridge housing 102, include aluminum, alloy steels and stainless steel to give a few non limiting examples. Other materials are however conceivable, such as nickel-based alloys, fiber reinforced plastics or similar.

The cartridge housing 102 comprises a first radially outer surface portion 104. The first radially surface portion 104 is a as best illustrated e.g. in Fig. 3A located at a lower portion of the cartridge housing 102. Thus, the first radially outer surface portion 104 is located at an end portion of the cartridge housing 102 which is intended to be located in an opening 52 of the vessel 50. The first radially outer surface portion 104 of the depicted seal cartridge 100 circumscribes the cartridge housing 102. The first radially outer surface portion 104 is provided with two outer seals 106. The outer seals 106 of the depicted seal cartridge 100 comprises a respective O-ring 106. Each one of the O-rings is provided in a groove circumscribing the first radially outer surface portion 104 of the seal cartridge 100.

The outer seals 106, e.g. the O-rings 106, are configured to abut and seal against an internal surface portion 56 associated with the vessel 50 defining the opening 52. In Fig. 4A it is illustrated how the outer seals 106 abut and seal against the internal surface portion 56. Thus, the outer seals 106 are each arranged between the first radially outer surface portion 104 of the cartridge housing 102 and the internal surface portion 56 defining the opening 52. In practice, the outer seals 106 are compressed to some extend so as to provide for a fluid tight sealing between the cartridge housing 102 and the flange 54.

The internal surface portion 56 may, as best illustrated in Figs. 2 and 4A, be an internal surface portion of a flange 54. Such flange 54 may for instance be welded, bolted or riveted to the vessel 50. However, the internal surface portion 56 associated with the vessel 50 may for instance be a surface portion the vessel 50 itself, or a surface portion of a duct pipe, or similar mounted to the vessel 50. In Fig. 4B, it is schematically illustrated how the flange 54 is mounted to the vessel 50, and how the flange 54 defines the opening 52 in the vessel 50.

It is to be noted that one or more outer seals 106 may be used to advantage although the depicted seal cartridge 100 is provided with two outer seals 106. For instance, one, two, three or four outer seals 106 may be used to give a few non-limiting examples.

Further, it is to be noted that any type of suitable outer seal 106 may be used to advantage. Such types of outer seals 106 include rubber seals, rubber gaskets, PTFE-seals and press-in-place seals to give a few non-limiting examples.

As best illustrated in Fig. 4A, the seal cartridge 100 comprises an inner sleeve 110. The inner sleeve 110 is rotationally coupled to the cartridge housing 102 via a bearing 112. The inner sleeve 110 is configured to receive the rotary shaft 12 along an axial direction AD thereof. The inner sleeve 110 is configured to co-rotate with the rotary shaft 12. In Fig. 4A it is illustrated how the rotary shaft 12 is received in the inner sleeve 110 along the axial direction AD of the inner sleeve 110.

In the depicted seal cartridge 100, the inner sleeve 110 is rotationally coupled to the cartridge housing 102 via a single bearing 112. It is however to be understood that the inner sleeve 110 may be rotationally coupled to the cartridge housing 102 via any suitable number of bearings 112, such as via two, three or four bearings 112.

The depicted inner sleeve 110 is machined from a metal material. Suitable metal materials for the inner sleeve 110, include aluminum, alloy steels and stainless steel to give a few non limiting examples. Other materials are however conceivable, such as nickel-based alloys, fiber reinforced plastics or similar.

As best illustrated in Figs. 4A and 4B, the seal cartridge 100 comprises rotary seal 120. The rotary seal 120 of the depicted seal cartridge 100 comprises two pairs of sealing elements. Each pair of sealing elements of the depicted rotary seal 120 comprises a non-rotary sealing element 122 and a rotary sealing element 124. It is however to be noted that a single pair of sealing elements 122, 124 is sufficient in the rotary seal 120. In the following, a pair of the pairs of sealing elements 122, 124 will be described to make the disclosure clearer. As best illustrated in Fig. 4B, the non-rotary sealing element 122 and the rotary sealing element 124 circumscribes the inner sleeve 110. Further, the non-rotary sealing element 122 and the rotary sealing element 124 are configured to seal against each. Thus, the non-rotary sealing element 122 and the rotary sealing element 124 bear against each other at the contact surface CS. This means that the rotary sealing element 124 will rotate and slide against the non-rotary sealing element 122 in a fluid tight fashion when the sleeve 110 is rotated in relation to the cartridge housing 102. Correspondingly, the non-rotary sealing element 122 and the rotary sealing element 124 will bear against each other in a fluid tight fashion when the sleeve 110 is stationary in relation to the cartridge housing 102.

In order to provide for a fluid tight overall sealing by the seal cartridge 100, the non-rotary sealing element 122 is sealingly coupled to the cartridge housing 102 and the rotary sealing element 124 is sealingly coupled to the inner sleeve 110. As best illustrated in Fig. 4B, an O-ring 123 is provided between the non-rotary sealing element 122 and the cartridge housing 102. Correspondingly, an O-ring 125 is provided between the rotary sealing element 124 and the inner sleeve 110.

As best illustrated in Fig. 4B, the rotary seal 120 comprises a spring element 128. The spring element 128 is configured to push the non-rotary sealing element 122 and the rotary sealing element 124 against each other. In practice, in the depicted design, the spring element 128 is provided between the non-rotary sealing elements 122. This means that the upper the non-rotary sealing elements 122 are pushed apart such that the upper non-rotary sealing element 122 is pushed upwards against the upper rotary sealing element 124, whereas the lower non-rotary sealing element 122 is pushed downwards against the lower rotary sealing element 124. The depicted spring element 128 is a wave spring. However, other types of spring elements may be used to advantage. For instance, one or more compression springs may be arranged between the non-rotary sealing elements 122. It is however to be understood that the rotary sealing element 124 may be spring loaded in relation to the non-rotary sealing element 122.

Further, in the depicted seal cartridge, as best illustrated in Fig. 4B, the lower non-rotary sealing element 122 may be mainly formed of silicon, whereas the upper non-rotary sealing element 122 may be mainly formed of carbon. Further, the upper and the lower rotary sealing elements 124 may both mainly be formed of silicon. It is however, to be understood that any configuration and suitable materials may be used for any non-rotary sealing element 122 and any rotary sealing element 124.

Further, as best illustrated in the enlarged view of Fig. 4B, a first end portion 110a of the inner sleeve 110 comprises an axially facing stop surface 111. In the depicted seal cartridge 100, the lower end of the inner sleeve 110 is provided with the stop surface 111. The stop surface 111 is configured to interact with an axially facing stop step 13 of the rotary shaft 12. The axially facing stop surface 111 may, as illustrated in the enlarged view of Fig. 4B bear against the axially facing stop step 13. It is however, to be understood that the axially facing stop surface 111 may interact directly or indirectly with the axially facing stop step 13. Thus, the axially facing stop surface 111 may interact with the axially facing stop step 13 via an additional element, such as a spacer or similar.

By the stop surface 111 interacting with the stop step 13 of the rotary shaft 12, the seal cartridge 100 may co-translate with the rotary shaft 12 in the axial direction AD in response to an axial translation of the radially extending stop step 13. Such co-translation in the axial direction AD is generally indicated by a double arrow in Fig. 4A at the interface between the first radially outer surface portion 104 and the internal surface portion 56 associated with the vessel 50.

By the ability of the seal cartridge 100 co-translating with the rotary shaft 12 in the axial direction AD, several significant advantages are achieved as have been explained above. Importantly, the complete seal cartridge 100 may follow any axial movement of rotary shaft 12. This means that the rotary seal 120 may follow any axial movement of rotary shaft 12. In other words, both the non-rotary sealing element 122 and the rotary sealing element 124 of the rotary seal may 120 follow any axial movement of rotary shaft 12, meaning that the mutual relationship between the non-rotary sealing element and the rotary sealing element may be unaffected by an axial movement of rotary shaft 12. Importantly, the seal cartridge 100 may be installed without the need of axial adjustments.

Thus, when the seal cartridge 100 co-translates with the rotary shaft 12 in the axial direction AD, the cartridge housing 102 will co-translates with the rotary shaft 12 in the axial direction AD. This means that the outer seals 106 provided at the first radially outer surface portion 104 will typically slidingly move along the internal surface portion 56 associated with the vessel 50 in the axial direction AD. To this end, the one or more outer seals 106 may be configured to slidingly move along the internal surface portion 56 associated with the vessel 50 in the axial direction AD in response to the seal cartridge 100 being translated in the axial direction AD. This means that any axial translation or movement of the seal cartridge 100 may in practice be accommodated by or accounted for by the outer seals 106 slidingly moving along the internal surface portion 56.

In practice and to advantage, the one or more outer seals 106 may typically be configured to slidingly move a distance D along the internal surface portion 56 in the axial direction AD corresponding to a distance D which the seal cartridge 100 is translated in the axial direction AD. The distance D is indicated with the letter D at the double arrow provided in Fig. 4A at the interface between the first radially outer surface portion 104 and the internal surface portion 56 associated with the vessel 50. In this regard, it is to be noted that the extension of the double arrow is exaggerated as compared to an actual D which the one or more outer seals 106 may typically slidingly move along the internal surface portion 56 in the axial direction AD. Thus, the same holds true for the actual distance D which the seal cartridge 100 is translated in the axial direction AD.

The present inventors have found that a seal cartridge 100 which is capable of handling relevant axial movements thereof may be realized when the one or more outer seals 106 are configured to slidingly move a distance D in a range of 0,1 mm to 3 mm along the internal surface portion 56 associated with the vessel 50 in the axial direction AD in response to the seal cartridge 100 being translated in the axial direction AD. In practice for a typical seal cartridge 100 the one or more outer seals 106 may slidingly move a distance D of about 0,5 mm along the internal surface portion 56 associated with the vessel 50 in the axial direction AD in response to the seal cartridge 100 being translated in the axial direction AD, during operation.

As best illustrated in Figs. 2 and 4A, a second opposite, end portion 110b of the inner sleeve 110 may comprise an axially facing abutment surface 114. Thus, the end portion of the inner sleeve 110 being opposite to the first end portion 110a, i.e. where the axially facing stop surface 111 is provided, may be provided with an axially facing abutment surface 114. The axially facing abutment surface 114 may be configured to receive an axial force F for pushing the axially facing stop surface 111 against the axially facing stop step 13. Thus, the axially facing abutment surface 114 may receive an axial force F which pushes the complete seal cartridge 100 towards the interior of the vessel 50 such that the axially facing stop surface 111 is pushed against the axially facing stop step 13 by the force F being transferred via the inner sleeve 110. In this way, it may be ensured that the complete seal cartridge 100 co-translates with rotary shaft 12 in response to an axial translation of the radially extending stop step 13.

As best illustrated in Figs. 2 and 4A, the axial force F may be applied by a pair of axially extending fixture elements 116 in form of fixture screws 116. As best illustrated in Fig. 4B, such fixture screws 116 may apply the axial force F by being tightened in relation to the rotary shaft 12. Thus, the axial force F may be applied by tightening the fixture screws 116 in relation to an element 117 which is attached to the rotary shaft 12. It is however to be understood that such fixture screws 116 may be tightened directly in relation to the rotary shaft 12 or may be tightened indirectly in relation to the rotary shaft 12 via one or more elements, such as the element 117. Thus, the axially extending fixture elements 116 may to advantage be configured to push against the axially facing abutment surface 114 in response to being tightened. As discussed above, any type of suitable fixture elements 116 may be used. As have been described above, by utilizing axially extending fixture elements 116, the radially outer surface of the rotary shaft may be spared from any damage or scratches related to fixing the rotary shaft 12 in relation to the cartridge housing 100.

As illustrated in Fig. 4B, the rotary shaft 12 may be radially supported in relation to the bearing housing 20 by a further bearing 118 via the element 117.

As best illustrated in Fig. 2, the second end portion 110b of the inner sleeve 110 may comprise a torque abutment surface 119 configured to receive a rotational torque for co-rotating the inner sleeve 110 with the rotary shaft 12. The torque abutment surface 119 may to this end extend in a direction such that it may receive a rotational torque for co-rotating the inner sleeve 110 with the rotary shaft 12. Thus, the torque abutment surface 119 may to this end face in a tangential direction of the rotary shaft 12 while being parallel to the axial direction AD of the inner sleeve 110. However, the torque abutment surface 119 may alternatively have a component facing in a tangential direction to the axial direction AD of the inner sleeve 110 so as to be able to receive a rotational torque.

In practice, the second end portion 110b of the inner sleeve 110 may comprise a pair torque abutment surfaces 119, where each torque abutment surface is configured to receive a rotational torque for co-rotating the inner sleeve 110 with the rotary shaft 12. This may, as best illustrated in Fig. 2, be achieved by a pair of torque abutment surfaces 119 (only one torque abutment surface 119 visible in Fig. 2) facing in a tangential direction to the axial direction AD and extending along the axial direction AD. In this way, a rotational torque may be transferred from the rotary shaft 12 to the inner sleeve 110 via the fixture elements 116 interacting with torque abutment surfaces 119.

It is however, to be noted that a significant amount of the rotational torque transferred from the rotary shaft 12 to the inner sleeve 110 may be transferred by the fixture elements 116 in pushing against the axially facing abutment surface 114. As a matter of fact, the entire rotational torque transferred from the rotary shaft 12 to the inner sleeve 110 may be transferred by the fixture elements 116 pushing against the axially facing abutment surface 114.

As best illustrated in Figs. 3A and 4A, the cartridge housing 102 may comprise a second radially outer surface portion 105. The second radially outer surface portion 105 may be configured to abut an inwardly facing surface 57 of the bearing housing 20 for radially supporting the seal cartridge 100, as illustrated in Fig. 4A. The second radially outer surface portion 105 may, as best illustrated in Figs. 3A and 4A, be provided with one or more outer seals 107. In the depicted bearing housing 100, the second radially outer surface portion 105 is provided with one outer seal 107, in form of an O-ring 107.

It will be appreciated that the present inventive concept is not limited to the variants and examples shown. Several modifications and variations are thus conceivable within the scope of the invention which thus is defined by the appended claims.

## Claims

1. A seal cartridge (100) for sealing an interface between an opening (52) in a vessel (50) and a rotary shaft (12) of an agitator system (10) extending into the vessel (50) through the opening (52), the seal cartridge (100) comprising:
a cartridge housing (102) comprising a first radially outer surface portion (104) provided with one or more outer seals (106) configured to abut and seal against an internal surface portion (56) associated with the vessel (50) defining the opening (52),
an inner sleeve (110) rotationally coupled to the cartridge housing (102) via a bearing (112), the inner sleeve (110) being configured to receive the rotary shaft (12) along an axial direction (AD) thereof and to co-rotate with the rotary shaft (12), and
a rotary seal (120) comprising; a non-rotary sealing element (122) and a rotary sealing element (124) each circumscribing the inner sleeve (110), wherein the non-rotary sealing element (122) and the rotary sealing element (124) are configured to seal against each other, wherein the non-rotary sealing element (122) is sealingly coupled to the cartridge housing (102) and the rotary sealing element (124) is sealingly coupled to the inner sleeve (110),
wherein a first end portion (110a) of the inner sleeve (110) comprises an axially facing stop surface (111) configured to interact with an axially facing stop step (13) of the rotary shaft (12), such that the seal cartridge (100) co-translates with the rotary shaft (12) in the axial direction (AD) in response to an axial translation of the radially extending stop step (13).

2. The seal cartridge (100) according to claim 1, wherein the axially facing stop surface (111) is configured to bear against the axially facing stop step (13).

3. The seal cartridge (100) according to claim 1 or 2, wherein the one or more outer seals (106) are configured to slidingly move along the internal surface portion (56) associated with the vessel (50) in the axial direction (AD) in response to the seal cartridge (100) being translated in the axial direction (AD).

4. The seal cartridge (100) according to any one of the preceding claims, wherein the one or more outer seals (106) are configured to slidingly move a distance along the internal surface portion (56) associated with the vessel (50) in the axial direction (AD) corresponding to a distance which the seal cartridge (100) being translated in the axial direction (AD).

5. The seal cartridge (100) according to any one of the preceding claims, wherein the one or more outer seals (106) are configured to slidingly move a distance in a range of 0,1 mm to 3 mm along the internal surface portion (56) associated with the vessel (50) in the axial direction (AD) in response to the seal cartridge (100) being translated in the axial direction (AD).

6. The seal cartridge (100) according to any one of the preceding claims, wherein a second, opposite, end portion (110b) of the inner sleeve (110) comprises an axially facing abutment surface (114) configured to receive an axial force (F) for pushing the axially facing stop surface (111) against the axially facing stop step (13).

7. The seal cartridge (100) according to claim 6, wherein the axial force (F) is applied by one or more axially extending fixture elements (116), such as fixture screws (116), configured to push against the axially facing abutment surface (114) in response to being tightened.

8. The seal cartridge (100) according to any one of the preceding claims, wherein the second end portion (110b) of the inner sleeve (110) comprises a torque abutment surface (119) configured to receive a rotational torque for co-rotating the inner sleeve (110) with the rotary shaft (12).

9. The seal cartridge (100) according to claim 8 when dependent on claim 7, wherein the torque abutment surface (119) is configured to receive the rotational torque by the one or more axially extending fixture elements (116) interacting with the torque abutment surface (119).

10. The seal cartridge (100) according to any one of the preceding claims, wherein the cartridge housing (102) comprises a second radially outer surface portion (105) configured to abut an inwardly facing surface (57) of a bearing housing (20) for radially supporting the seal cartridge (100).

11. The seal cartridge (100) according to any one of the preceding claims, wherein each outer seal (106) comprises an O-ring (106) provided in a groove circumscribing the first radially outer surface portion (104) of the seal cartridge (100).

12. The seal cartridge (100) according to any one of the preceding claims, wherein the rotary seal (120) comprises a spring element (128) configured to push the non-rotary sealing element (122) and the rotary sealing element (124) against each other.

13. The seal cartridge (100) according to any one of the preceding claims, wherein the non-rotary sealing element (122) is mainly formed of silicon or carbon, and wherein the rotary sealing element (124) is mainly formed of silicon.

14. An agitator system (10) for mixing a liquid product (2) held in a vessel (50), the agitator system (10) comprising:
a rotary shaft (12) provided with one or more impellers (14) configured to mix the liquid product (2),
a drive unit (11) coupled to the rotary shaft (12) and configured to rotate the rotary shaft (12), and
a seal cartridge (100) according to any one of the preceding claims, for sealing an interface between an internal surface portion (57) associated with the vessel (50) defining an opening (52) in the vessel (50) for receiving the rotary shaft (12) and the rotary shaft (12).

15. A mixing arrangement (1) for mixing a liquid product (2), the mixing arrangement (1) comprising:
a vessel (50) configured to hold the liquid product (2), and
an agitator system (10) according to claim 14, wherein the rotary shaft (12) extends into the vessel (50) through the opening (12) such that the one or more impellers (14) are located in the vessel (50), and the drive unit (11) is located outside of the vessel (50), wherein the interface between the opening (52) in the vessel (50) and the rotary shaft (12) is sealed by the seal cartridge (100).
